# EUROPEAN PATENT SPECIFICATION

(11) **EP 0 472 500 B1**
(45) Date of publication and mention of the grant of the patent: **25.11.1998**
(21) Application number: 91810644.4
(22) Date of filing: 14.08.1991
(51) Int. Cl.: A23L 1/236, A23G 3/30, A23G 3/00

(54) **Stabilized chlorodeoxysugar sweetening agents in solid form and methods for preparing same**
Stabilisierte Chlordeoxysaccharid-Typ Süssstoffe in fester Form und Verfahren zu deren Herstellung
Edulcorants type chlordéoxysaccharide stabilisés à l'état solide et procédés de leur préparation

(30) Priority: 21.08.1990 US 570665
(43) Date of publication of application: 26.02.1992
(73) Proprietor: McNEIL-PPC, INC., Skillman, NJ 08558 (US)
(72) Inventor: Raman, Krishna P., Randolph, NJ 07869 (US); Faust, Steven M., Oakridge, NJ 07438 (US); Cherukuri, Subraman Rao, Towaco, NJ 07082 (US)
(74) Representative: Groening, Hans Wilhelm, Dipl.-Ing.

(56) References cited:
- EP-A- 267 809
- EP-A- 0 050 952
- US-A- 4 820 528
- ROEMPP CHEMIE LEXIKON, 9. Auflage, Band 6, Thieme Verlag; Seiten 5164-5165
- ROMPP CHEMIE LEXIKON, 9. Auflage, Band 4, Thieme Verlag; Seite 3108

## Description

This invention pertains to stabilized chlorodeoxysugar sweetening agent compositions in solid form. More particularly, this invention pertains to stabilized sweetening agent compositions which comprise a freeze-dried mixture of a chlorodeoxysugar derivative, such as chlorodeoxysucrose and chlorodeoxy-galactosucrose derivatives, and a stabilizing agent wherein the stabilizing agent is capable of forming a stabilizing mixture with the chlorodeoxysugar derivative. The stabilized sweetening agent compositions may be utilized in a wide variety of ingestible compositions. This invention also pertains to methods for preparing these stabilized sweetening agent compositions and the ingestible compositions in which they may be employed.

Intense sweetening agents are well known in the art and are widely used as substitutes for sugar in many low calorie and noncariogenic compositions. Intense sweetening agents are natural or synthetic compounds which have a greater sweetening intensity, and usually a lower caloric value, than that of sugar (sucrose). Because intense sweetening agents have greater sweetening properties than sugar, smaller amounts of the sweetening agents provide sweetening intensity equivalent to larger amounts of sugar.

Intense sweeteners have a wide range of chemically distinct structures and hence possess varying properties. These intense sweetener compounds include water-soluble artificial sweeteners such as 1, 2-benzisothiazol-3(2H)-one 1, 1-dioxide (saccharin and its salts), cyclohexylsulfamic acid (cyclamate and its salts), and the potassium salt of 6- methyl-1,2,3-oxathiazin-A(3H)-one-2,2-dioxide (Acesulfame-K, a commercially available product from Hoechst Celanese Corporation, Somerville, New Jersey), proteins such as thaumatin (Talin, a commercially available product of Tate & Lyle Products, Reading, United Kingdom), chlorodeoxysugar derivatives (such as Sucralose, a commercially available product of McNeil Specialty Products Company, Skillman, New Jersey), and dipeptides such as N-L-alpha-aspartyl-L-phenylalanine 1-methyl ester (Aspartame, a commercially available product of the Nutrasweet Company, Deerfield, Illinois) and L-alpha-aspartyl-D-alanine N-(2,2,4,4-tetramethyl-3 -thietanyl)amide (Alitame, a commercially available product of Pfizer, New York, New York), and dihydrochalcones. Each of these sweetening agents has a distinct sweetening intensity compared to sucrose and this sweetening intensity is well documented. For example, the following sweetening agents have the sweetening intensities set out below.

### Sweetness Intensities of Various Sweetening Agents

| COMPOUND | SWEETNESS INTENSITY* |
|---|---|
| 1, 2-Benzisothiazol-3(2H)-one 1, 1-dioxide | |
| (Saccharin and its salts) | 300X |
| Cyclohexylsulfamic acid | |
| (Cyclamate and its salts) | 30X |
| N-L-alpha-Aspartyl-L-phenylalanine | 180X- |
| 1-methyl ester (Aspartame) | 200X |
| Potassium salt of 6-methyl- | |
| 1,2,3-oxathiazin-4(3H)-one- | 160X |
| 2,2-dioxide (Acesulfame-K) | 200X |
| 4,1',6'-Trichloro-4,1',6'-trideoxy- | |
| galactosucrose (Sucralose) | 600X |
| L-alpha-Aspartyl-N-(2,2,4,4- | |
| tetramethyl-3-thietanyl)-D- | |
| alaninamide hydrate (Alitame) | 2000X |

| | |
|---|---|
| * Compared to sucrose. | |

Because of its intense sweetness, Sucralose is a useful substitute for sugar.

United States patent no. 4,435,440, issued to Hough et al. and assigned to Tate and Lyle plc, discloses sweetening agents which comprise chlorodeoxysugar derivatives.

United States patent no. 4,495,170, issued to Beytes et al. and assigned to Tate and Lyle plc, discloses synergistic sweetening compositions which comprise a mixture of a chlorodeoxysugar and another sweetening agent which has an associated bitter taste. The chlorodeoxysugars are selected from the group consisting of chlorodeoxysucroses and chlorodeoxygalacto-sucroses. The bitter tasting sweetening agent is selected from the group consisting of Saccharin, stevioside and Acesulfame-K.

United States patent application serial no. 230,282, filed August 9, 1988, to Cherukuri et al. and assigned to Warner-Lambert Company, discloses synergistic sweetening compositions which comprise Sucralose and Aspartame and Sucralose and Alitame. In general, the synergistic sweetening compositions comprise Sucralose and Aspartame, or Sucralose and Alitame, in a ratio by weight from about 65:35 to about 91.7:8.3, respectively.

United States patent application serial no. 264,248, filed October 28, 1988, to Cherukuri et al. and assigned to Warner-Lambert Company, discloses synergistic sweetening compositions which comprise Sucralose and Maltitol.

PCT patent application serial no. WO 89/03182A, priority date October 6, 1987, to Tate & Lyle plc, discloses synergistic sweetening compositions which comprise Sucralose and a saccharide bulk sweetening agent selected from the group consisting of fructose, glucose, maltose, xylitol, mannitol, and sorbitol.

European Patent Application serial no. 267,809A2 discloses synergistic sweetening compositions which comprise Sucralose and maltodextrin.

United States patent no. 4,820,528, issued to Stroz et al. and assigned to Nabisco Brands, Inc., discloses a codried composition consisting essentially of about 99.9% to 90% saccharin and about 0.1% to about 10% of a halodeoxysugar, by weight.

United Kingdom patent application no. 2,197,575A, to Jenner and assigned to Tate & Lyle plc, discloses a codried composition consisting of from about 20% to about 80% sucralose and a water-soluble oligosaccharide, by dry weight.

PCT patent application serial no. WO 89/08672A, priority date May 15, 1987, to Yatka et al., discloses a chewing gum composition having controlled sweetness wherein the gum contains an effective amount of Sucralose.

Because each intense sweetening agent is chemically distinct, each sweetener presents a different challenge with respect to the actual use of the sweetener in ingestible compositions. For example, chlorodeoxysugar derivatives such as Sucralose turn dark during storage. This color change for Sucralose occurs at the following rate:

| Temperature | Decomposition Time |
|---|---|
| 24° C. | 18-36 months |
| 30° C. | 3 months |
| 40° C. | 3 weeks |
| 50° C. | 1 week |

The color decomposition of Sucralose is believed to be initiated by exposure of Sucralose to heat and moisture during storage. Generally, decomposition begins slowly and then, once begun, the decomposition reaction accelerates rapidly.

European patent application no. 255,260, to Jackson et al. and assigned to Tate & Lyle plc, discloses a method for stabilizing Sucralose by reducing the size of the particle and limiting the particle size distribution. Jackson et al. discloses that Sucralose can be solidified by freeze-drying to form a hygroscopic glass.

United Kingdom patent application no. 2,169,601A, to Jackson and assigned to Tate & Lyle plc, discloses thermally stabilized Sucralose compositions which are prepared by co-crystallizing Sucralose with a nitrogenous base.

United States patent no. 4,927,646, issued to Jenner et al., and assigned to Tate & Lyle plc, discloses thermally stabilized Sucralose compositions which are prepared by spray drying a mixture of Sucralose and a water-soluble glucose oligosaccharide.

United States patent no. 4,971,797, filed December 22, 1998, to Cherukuri et al. and assigned to Warner-Lambert Company, discloses stabilized chlorodeoxysugar sweetening agent compositions which comprise a chlorodeoxysugar derivative a stabilizing agent.

While the above references disclose a variety of sweetening agent compositions having improved stabilities, none of the above references disclose a satisfactory stabilized chlorodeoxysugar sweetening agent in solid form. Aqueous solutions of chlorodeoxysugar derivatives are not suitable for use in certain anhydrous edible compositions, small particle size Sucralose is difficult to prepare and is only moderately stable during storage, and Sucralose co-crystallized with a nitrogenous base contains undesirable amines. Hence it would be desirable to develop improved stabilized chlorodeoxysugar compositions without the disadvantages characteristic of previously known products. Such stabilized sweetening agent compositions could be stored for longer periods of time and could be processed at higher temperatures. The present invention provides such stabilized chlorodeoxysugar sweetening agent compositions and the sweetened ingestible compositions in which the stabilized sweetening agent compositions may be used.

According to the present invention there is provided a stabilized chlorodeoxysugar sweetening agent composition in solid form which comprises a freeze-dried mixture of a chlorodeoxysugar derivative and an effective amount of a non-bulk stabilizing agent comprising 0.01 to 0.4 % by weight of a buffer agent and 0.01 to 0.5 % by weight of a preservative, based on the weight of the sweetening composition, said preservative being selected from the group consisting of sodium benzoate, potassium sorbate, butylated hydroxyanisol, butylated hydroxytoluene, benzoic acid, ascorbic acid, methyl parabene, propyl parabene, tocopherols and mixtures thereof.

The present invention still further provides a method for preparing a stabilized sweetening agent composition in solid form which comprises:
(A) admixing a chlorodeoxysugar derivative and an effective amount of a non-bulk stabilizing agent in water, wherein the non-bulk stabilizing agent comprises a buffer agent and a preservative as defined above, the buffer agent being present in an amount sufficient to maintain the pH value of the water between about 4 and about 5; and
(B) freeze-drying the mixture from step (A) to obtain the stabilized sweetening agent composition.

The stabilized sweetening agent compositions may be used in a wide variety of ingestible products such as chewing gum compositions, hard and soft confections, beverages, and the like. The present invention also pertains to methods for preparing the stabilized sweetening agent compositions and the ingestible products in which they may be used.

The invention will be further apparent from the following description.

Applicants have found that freeze-dried mixtures of a chlorodeoxysugar derivative and an effective amount of a stabilizing agent result in stabilized chlorodeoxysugar sweetening agent compositions in solid form which have improved stability during storage and at elevated temperatures. While not wishing to be bound by theory, applicants believe that upon being exposed to heat and moisture over a period of time, chlorodeoxysugar derivatives decompose accompanied by generation of chloride or hydrogen chloride ions, or other degradative ions. Such ions can react with adjacent molecules of chlorodeoxysugar derivatives which in turn decompose and generate additional degradative ions. Such chain reactions accelerate the decomposition of chlorodeoxysugar derivatives.

The stabilizing agents of the present invention prevent or retard this decomposition reaction by a combination of chemical and physical factors. Chemically, the stabilizing agents retard the decomposition reaction by capturing degradative ions or otherwise binding these ions and thereby preventing their reaction with the chlorodeoxysugar molecules. Physically, the stabilizing agents retard the decomposition reaction by acting as diluents and separating the chlorodeoxysugar molecules from each other and thereby preventing or slowing the reaction of the degradative ions with adjacent chlorodeoxysugar molecules.

By freeze-drying the mixture, of chlorodeoxysugar derivative and stabilizing agent, a more intimate mixture of components is created which further improves the chemical and physical stabilization of the sweetening agent composition. The formation of such an intimate mixture of components enhances the ability of the stabilizing agent to capture degradative ions and to dilute the chlorodeoxysugar molecules. Freeze-drying the mixture of chlorodeoxysugar derivative and stabilizing agent also enhances the crystalline structure of the Sucralose mixture presumably as a result of increased ionic bonding between the molecules in the mixture. This enhanced crystalline structure results in chlorodeoxysugar sweetening agent compositions which have improved stability.

Applicants define the terms "ingestible" and "edible" to include all materials and compositions which are used by or which perform a function in the body. These include materials and compositions which are absorbed and those which are not absorbed as well as those which are digestible and non-digestible.

The intense sweetening agents (sweeteners) in the present invention are chlorodeoxysugar derivatives. The chlorodeoxysugar derivatives may be selected from the group consisting of chlorodeoxysucrose derivatives, chlorodeoxygalactosucrose derivatives, and mixtures of those. Examples of chlorodeoxysucrose and chloro-deoxygalactosucrose derivatives include but are not limited to:
(a) 1-chloro-1'-deoxysucrose;
(b) 4-chloro-4-deoxy-alpha-D-galactopyranosyl-alpha-D-fructofuranoside, or 4-chloro-4-deoxygalacto-sucrose;
(c) 4-chloro-4-deoxy-alpha-D-galactopyranosyl -1-chloro-1-deoxy-beta-D-fructofuranoside, or 4,1'-dichloro-4,1'-dideoxygalactosucrose;
(d) 1',6'-dichloro-1',6'-dideoxysucrose;
(e) 4-chloro-4-deoxy-alpha-D-galactopyranosyl -1,6-dichloro-1,6 -dideoxy-beta-D-fructofuranoside, or 4,1',6'-trichloro-4,1',6'-trideoxygalactosucrose;
(f) 4-6-dichloro-4,6-dideoxy-alpha-D-galacto-pyranosyl-6-chlor o-6-deoxy-beta-D-fructofuranoside, or 4,6,6'-trichloro-4,6,6'-trideoxygalactosucrose;
(g) 6,1',6'-trichloro-6,1',6'-trideoxysucrose;
(h) 4,6-dichloro-4,6-dideoxy-alpha-D-galactopyranosyl-1,6-dichloro-1,6-dideoxy-beta-D-fructo-furanoside, or 4,6,1',6'-tetrachloro-4,6,1',6'-tetra-deoxygalactosucrose; and
(i) 4,6,1',6'-tetrachloro-4,6,1',6'-tetra-deoxysucrose.

In a preferred embodiment, the chlorodeoxysugar derivative is 4,1',6'-trichloro-4,1',6'-trideoxygalacto-sucrose (C₁₂H₁₉Cl₃O₈, 4-chloro-4-deoxy-alpha-D-galacto-pyranosyl-1,6-dichloro-1, 6-dideioxy-beta-D-fructo-furanoside) which is commercially available under the tradename Sucralose from McNeil Specialty Products Company, Skillman, New Jersey. Sucralose is a free-flowing white crystalline solid that is freely soluble in water. Sucralose is prepared from sucrose in a five step process which selectively substitutes three chlorine atoms for three hydroxyl groups.

The intense sweetening agent of the present invention may be used in many distinct physical forms well known in the art to provide an initial burst of sweetness and/or a prolonged sensation of sweetness. Without being limited thereto, such physical forms include free forms, such as spray dried, powdered, and beaded forms, and encapsulated forms, and mixtures of those.

The stabilizing agents in the present invention are water-soluble, solid compounds which are characterized by having the ability to form a stabilizing mixture with the chlorodeoxysugar derivative so that the stability of the chlorodeoxysugar derivative is increased during storage. Stabilizing agents in the present invention must be capable of retarding the degradation of the chlorodeoxysugar derivative and must not cause such degradation. The stabilizing agents must absorb or bind the degradative ions generated during the degradation reaction of the chlorodeoxysugar derivative and must not cause or induce degradative ion formation. Preferably, the stabilizing agents are not acidic. The stabilizing agents must also be able to dilute the chlorodeoxysugar derivative and preferably have a small particle size. Such stabilizing agents must also be "pharmaceutically acceptable" which means that the agents must be non-toxic to humans and must not have undesirable side effects when administered to humans. Such agents must not adversely affect the sweetness intensity of the chlorodeoxysugar derivative. Thus, a stabilizing agent in the present invention is an agent which binds degradative ions, does not induce degradative ion formation, dilutes the chlorodeoxysugar derivative, is pharmaceutically acceptable, and does not adversely affect the sweetness intensity of the chlorodeoxysugar derivative.

The amount of bulk stabilizing agent present in the stabilized sweetening agent composition is an effective amount of a stabilizing agent. In general, an effective amount of a bulk stabilizing agent is that amount of bulk stabilizing agent which will increase the useful storage life of the chlorodeoxysugar by a factor of at least two fold.

Buffer agents are agents which, when dissolved in water, form solutions to which limited amounts of a strong acid or strong base may be added without causing a significant change in the pH value of the solution. Buffer agents usually contain two components, such as a weak acid and a salt of a weak acid, a mixture of an acid salt with the normal salt, or a mixture of two acid salts.

The buffer agents in the present invention are agents which are capable of maintaining the pH value of an effective amount of the chlorodeoxysugar derivative in aqueous solution between about 4 and about 7, preferably between about 4 and about 6, and more preferably between about 4 and about 5. The buffer agent must not induce degradation of the chlorodeoxysugar derivative or otherwise adversely affect the sweetness intensity of the chlorodeoxysugar derivative. Suitable buffer agents in the present invention include citric acid-sodium citrate, phosphoric acid-sodium phosphate, and acetic acid-sodium acetate, and mixtures thereof. The buffer agent is preferably citric acid-sodium citrate.

The exact ratio of weak acid to salt in the buffer agent to obtain a specific pH value between about 4 and about 7 in aqueous solution is well known in the art. In general, the ratio of weak acid to salt in the buffer agent will be from about 1:1.27 to about 1:0.16, preferably from about 1:1 to about 1:0.25, and more preferably from about 1:1 to about 1:0.5, respectively. The total amount of buffer agent in the stabilized sweetening agent composition is an effective amount of buffer agent. In general, an effective amount of buffer agent is that amount of buffer agent sufficient to maintain the pH value of the chlorodeoxysugar derivative in aqueous solution between about 4 and about 7. In a preferred embodiment, the buffer agent is present in the sweetening agent composition in an amount from about 0.01% to about 0.4%, preferably from about 0.05% to about 0.3%, and more preferably from about 0.08% to about 0.15%, by weight of the sweetening agent composition.

Preservatives are compounds which prevent or inhibit degradation of other compounds. The preservatives in the present invention are compounds which inhibit degradation of the chlorodeoxysugar derivatives, do not induce degradation of the chlorodeoxysugar derivative, or otherwise adversely affect the sweetness intensity of the chlorodeoxysugar derivative.

Suitable preservatives in the present invention may be selected from the group consisting of sodium benzoate, potassium sorbate, butylated hydroxyanisol, butylated hydroxytoluene, benzoic acid, ascorbic acid, methyl paraben, propyl paraben, tocopherols, and mixtures thereof. The preservative is preferably selected from the group consisting of sodium benzoate, potassium sorbate, and mixtures thereof.

The amount of preservative in the stabilized sweetening agent composition is an effective amount of a preservative. In general, an effective amount of a preservative is that amount of preservative which will increase the useful storage life of the chlorodeoxysugar by a factor of at least two fold. In a preferred embodiment, the preservative is present in the sweetening agent composition in an amount from about 0.01% to about 0.5%, preferably from about 0.05% to about 0.3%, and more preferably from about 0.08% to about 0.15%, by weight of the sweetening agent composition.

The stabilized sweetening agent compositions of the present invention are prepared by freeze-drying a mixture of a chlorodeoxysugar derivative and an effective amount of a stabilizing agent. Freeze drying (lyophilization) is a technique for separating water from frozen materials, especially sensitive materials, by converting frozen water directly into vapour without the intermediate formation of liquid water. Freeze drying involves the absorption of heat by the frozen material to vaporize the water, the use of vacuum to enhance water vapour removal from the surface of the frozen material, the transfer and deposit of water vapour onto a condenser, and the removal of heat generated by ice formation on the condenser by means of a compressor or bath.

In a typical method for preparing a stabilized sweetening agent composition according to the present invention, a chlorodeoxysugar derivative and a stabilizing agent are first admixed in water. The admixture is then frozen and placed under high vacuum to vaporize the ice (water) without melting the mixture. The chlorodeoxysugar derivative and the stabilizing agent mixture are left behind undamaged.

In one preferred embodiment, the present invention is directed at a method for preparing a stabilized sweetening agent composition in solid form which comprises:
(A) admixing a chlorodeoxysugar derivative and an effective amount of a non-bulk stabilizing agent in water, wherein the non-bulk stabilizing agent comprises a buffer agent and a preservative as defined above, the buffer agent being present in an amount sufficient to maintain the pH value of the water between about 4 and about 5; and
(B) freeze-drying the mixture from step (A) to obtain the stabilized sweetening agent composition.

In another embodiment, the present invention is directed at a stabilized sweetening agent composition in solid form prepared by the method which comprises:
(A) admixing a chlorodeoxysugar derivative and an effective amount of a non-bulk stabilizing agent in water, wherein the non-bulk stabilizing agent comprises a buffer agent and a preservative as defined above, the buffer agent being present in an amount sufficient to maintain the pH value of the water between about 4 and about 5; and
(B) freeze-drying the mixture from step (A) to obtain the stabilized sweetening agent composition.

The combination of the freeze-dried mixture of chlorodeoxysugar derivative and stabilizing agent set out above results in a stabilized sweetening agent composition having improved stability in solid form during storage and at elevated temperatures. The stabilizing effect of the present composition is markedly greater than that expected by the mere addition of the stabilizing agent to a chlorodeoxysugar derivative. Accordingly, applicants' stabilized sweetening agent compositions have the advantage over conventional compositions of being stable over a longer period of time and under adverse processing conditions.

Once prepared, the inventive stabilized sweetening agent composition may be stored for future use or may be formulated in effective amounts with conventional additives, such as pharmaceutically acceptable carriers or confectionery ingredients, to prepare a wide variety of ingestible compositions such as foodstuffs, beverages, powdered drinks, jellies, extracts, hard and soft confectionery products, table-top sweeteners, orally administered pharmaceutical compositions, and hygienic products such as toothpastes, dental lotions, mouth washes and chewing gums.

The amount of the inventive stabilized sweetening agent composition employed in an ingestible composition is an effective amount to sweeten the ingestible composition. The exact amount of the stabilized sweetening agent composition employed is a matter of preference, subject to such factors as the type of carrier employed in the composition, the other ingredients in the composition, and the strength of sweetness desired. Thus, the amount of stabilized sweetening agent composition may be varied in order to obtain the result desired in the final product and such variations are within the capabilities of those skilled in the art without the need for undue experimentation. In general, the amount of stabilized sweetening agent composition normally present in an ingestible composition will be up to about 0.5%, preferably from about 0.001% to about 1%, and more preferably from about 0.005% to about 0.4%, by weight of the edible composition.

The present invention extends to methods of making the ingestible compositions. In such a method, a composition is made by admixing an effective amount of the stabilized sweetening agent composition of the present invention with a pharmaceutically acceptable carrier or confectionery material and the other ingredients of the final desired ingestible composition. Other ingredients will usually be incorporated into the composition as dictated by the nature of the desired composition as well known by those having ordinary skill in the art. The ultimate ingestible compositions are readily prepared using methods generally known in the food technology and pharmaceutical arts.

In one embodiment, the present invention is directed at a method for preparing a sweetened ingestible composition which comprises:
(A) admixing a chlorodeoxysugar derivative and an effective amount of a non-bulk stabilizing agent in water, wherein the non-bulk stabilizing agent comprises a buffer agent and a preservative as defined above, the buffer agent being present in an amount sufficient to maintain the pH value of the water between about 4 and about 5; and
(B) freeze-drying the mixture from step (A) to obtain the stabilized sweetening agent composition; and
(C) admixing the freeze-dried mixture from step (B) with a pharmaceutically acceptable carrier.

In other embodiments, the present invention is directed at sweetened ingestible compositions prepared by the methods set out above.

In a further embodiment, the present invention is directed at a method for sweetening an ingestible composition which comprises adding to the ingestible composition an effective amount of a stabilized sweetening agent composition in solid form wherein the stabilized sweetening agent composition comprises a chlorodeoxysugar derivative and a stabilizing agent.

An important aspect of the present invention includes a chewing gum composition incorporating the inventive stabilized sweetening agent composition and a method for preparing the chewing gum composition, including both chewing gum and bubble gum formulations. In general, the improved chewing gum compositions will contain a gum base, a bulking agent, an effective amount of the inventive stabilized sweetening agent composition, and various additives such as a flavoring agent.

The chewing gum compositions may be reduced-calorie chewing gums employing high levels of a chewing gum base having an enhanced hydrophilic character. These reduced-calorie chewing gums will comprise a gum base present in an amount from about 50% to about 85%, preferably from about 50% to about 75%, and more preferably from about 60% to about 70%, by weight of the chewing gum composition. When a reduced-calorie product is not desired, the chewing gum composition may contain lower amounts of a chewing gum base. These chewing gums will comprise a gum base present in an amount up to about 55%, preferably from about 15% to about 40%, and more preferably from about 20% to about 35%, by weight of the chewing gum composition.

As used herein, the term "reduced-calorie composition" means a composition having a caloric value two thirds or less than that of a conventional composition. The term "tight" or "rubbery" chew refers to a chewing gum composition which requires a large amount of muscular chewing effort to masticate or to a composition which provides a gum bolus with high elasticity and bounce and which is difficult to deform.

Gum bases having an enhanced hydrophilic character include polyvinyl acetate gum bases which may also contain a low melting point wax. Such gum bases do not require a high level of bulking agent to plasticize the gum base and render it soft during chewing. These gum bases may be used at higher than normal levels in chewing gum compositions in place of a bulking agent or a bulk sweetening agent, or both, to prepare high base-low stabilizing agent reduced-calorie gums which do not have rubbery or tight chew characteristics. These gum bases possess increased hydrophilic properties over conventional gum bases and appear to increase in size during chewing releasing flavoring and sweetening agents which would normally be entrapped in the gum base while maintaining a soft chew texture. Reduced-calorie chewing gum compositions prepared with such gum bases in high levels are less hygroscopic (have lower moisture-pickup) and are less prone to becoming stale than conventional reduced-calorie gum compositions while having comparable firmness and texture.

The elastomers (rubbers) employed in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene-butadiene copolymers (SBR), polyisobutylene, isobutylene-isoprene copolymers, polyethylene, and the like, and mixtures thereof.

The amount of elastomer employed in the gum base will vary greatly depending upon various factors such as the type of gum base used, the consistency of the gum composition desired and the other components used in the composition to make the final chewing gum product. In general, the elastomer will be present in the gum base in an amount from about 0.5% to about 20%, and preferably from about 2.5% to about 15%, by weight of the gum base.

The polyvinyl acetate polymer employed in the gum base is a polyvinyl acetate polymer having a medium molecular weight, specifically, having a mean average molecular weight in the range from about 35,000 to about 55,000. This medium molecular weight polyvinyl acetate polymer will preferably have a viscosity from about 35 seconds to about 55 seconds (ASTM designation D1200-82 using a Ford cup viscometer procedure). The medium molecular weight polyvinyl acetate polymer will be present in the gum base in an amount from about 10% to about 25%, and preferably from about 12% to about 27%, by weight of the gum base.

The medium molecular weight polyvinyl acetate polymer may also be blended with a low molecular weight polyvinyl acetate polymer. The low molecular weight polyvinyl acetate polymer will have a mean average molecular weight in the range from about 12,000 to about 16,000. This low molecular weight polyvinyl acetate polymer will preferably have a viscosity from about 14 seconds to about 16 seconds (ASTM designation D1200-82 using a Ford cup viscometer procedure). The low molecular weight polyvinyl acetate polymer will be present in the gum base in an amount up about 17%, and preferably from about 12% to about 17%, by weight of the gum base.

When a low molecular weight polyvinyl acetate polymer is blended with a medium molecular weight polyvinyl acetate polymer, the polymers will be present in a mole ratio from about 1:0.5 to about 1:1.5, respectively.

The medium molecular weight polyvinyl acetate polymer may also be blended with a high molecular weight polyvinyl acetate polymer. The high molecular weight polyvinyl acetate polymer will have a mean average molecular weight in the range from about 65,000 to about 95,000. The high molecular weight polyvinyl acetate polymer will be present in the gum base in an amount up to about 5%, by weight of the gum base.

The acetylated monoglycerides, like the polyvinyl acetate polymer, serve as plasticizing agents. While the saponification value of the acetylated monoglycerides is not critical, preferable saponification values are 278 to 292, 316 to 331, 370 to 380, and 430 to 470. A particularly preferred acetylated monoglyceride has a saponification value above about 400. Such acetylated monoglycerides generally have an acetylation value (percentage acetylated) above about 90 and a hydroxyl value below about 10 (Food Chemical Codex (FCC) III/P508 and the revision of AOCS).

The use of acetylated monoglycerides in the present gum base is preferred over the use of bitter polyvinyl acetate (PVA) plasticizers, in particular, triacetin. The acetylated monoglycerides will be present in the gum base in an amount from about 4.5% to about 10%, and preferably from about 5% to about 9%, by weight of the gum base.

The wax in the gum base softens the polymeric elastomer mixture and improves the elasticity of the gum base. The waxes employed will have a melting point below about 60° C., and preferably between about 45° C. and about 55° C. A preferred wax is low melting paraffin wax. The wax will be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnauba wax, most petroleum waxes, and the like, and mixtures thereof.

In addition to the components set out above, the gum base includes a variety of traditional ingredients, such as a component selected from the group consisting of elastomer solvents, emulsifiers, plasticizers, fillers, and mixtures thereof. These ingredients are present in the gum base in an amount to bring the total amount of gum base to 100%.

The gum base may contain elastomer solvents to aid in softening the elastomer component. Such elastomer solvents may comprise those elastomer solvents known in the art, for example, terpinene resins such as polymers of alpha-pinene or beta-pinene, methyl, glycerol and pentaerythritol esters of rosins and modified rosins and gums, such as hydrogenated, dimerized and polymerized rosins, and mixtures thereof. Examples of elastomer solvents suitable for use herein include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system. The emulsifiers useful include glyceryl monostearate, lecithin, fatty acid monoglycerides, diglycerides, propylene glycol monostearate, and the like, and mixtures thereof. A preferred emulsifier is glyceryl monostearate. The emulsifier may be employed in amounts from about 2% to about 15%, and preferably from about 7% to about 11% by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20%, and preferably in amounts from about 9% to about 17%, by weight of the gum base.

Preferred plasticizers are the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and preferably in amounts from about 5% to about 13.5%, by weight of the gum base.

In another preferred embodiment, the softening agent is anhydrous glycerin, such as the commercially available United States Pharmacopeia (USP) grade. Glycerin is a syrupy liquid with a sweet warm taste and has a sweetness of about 60% of that of cane sugar. Because glycerin is hygroscopic, it is important that the anhydrous glycerin be maintained under anhydrous conditions throughout the preparation of the chewing gum composition.

The gum base may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, and the like, and mixtures thereof. These fillers or adjuvants may be used in the gum base compositions in various amounts. Preferably the amount of filler, when used, will be present in an amount from about 15% to about 40%, and preferably from about 20% to about 30%, by weight of the gum base.

A variety of traditional ingredients may be optionally included in the gum base in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

The manner in which the gum base components are admixed is not critical and is performed using standard techniques and apparatus known to those skilled in the art. In a typical method, an elastomer is admixed with an elastomer solvent and/or a plasticizer and/or an emulsifier and agitated for a period of from 1 to 30 minutes. After blending is complete, the polyvinyl acetate component is admixed into the mixture. The medium molecular weight polyvinyl acetate is preferably admixed prior to addition of the optional low molecular weight polyvinyl acetate to prevent the creation of pockets of polyvinyl acetate within the elastomer mixture. The remaining ingredients, such as the low melting point wax, are then admixed, either in bulk or incrementally, while the gum base mixture is blended again for 1 to 30 minutes.

In one embodiment, the reduced-calorie chewing gum composition comprises a gum base present in an amount from about 40% to about 75%, by weight of the chewing gum composition, which comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base.

Chewing gum compositions employing a high level of a chewing gum base having an enhanced hydrophilic character are more fully described in United States patent no. 4,872,884, which disclosure is incorporated herein by reference.

Other gum bases having an enhanced hydrophilic nature and suitable for use in reduced-calorie chewing gum compositions in high levels may also be employed in the present invention. In general, these gum bases may be employed in amounts up to 99%, preferably from about 40% to about 85%, and more preferably from about 40% to about 7596, by weight of the chewing gum composition. Suitable gum bases having an enhanced hydrophilic nature include, for example, those disclosed in United States patent no. 4,698,223, which disclosure is incorporated herein by reference. The gum base is formulated with the inventive stabilized sweetening agent composition and conventional additives such as a bulking agent to prepare a wide variety of sweetened chewing gum compositions.

The amount of gum base employed in the chewing gum composition will vary depending on such factors as the type of gum base used, the consistency desired, and the other components used to make the final chewing gum product. In general, the gum base having an enhanced hydrophilic character will be present in the chewing gum composition in an amount from about 50% to about 85%, preferably from about 50% to about 75%, and more preferably from about 60% to about 70%, by weight of the chewing gum composition.

In another embodiment, the chewing gum composition contains lower amounts of a chewing gum base. In general, the gum base in these chewing gum compositions will be present in an amount up to about 55%, preferably from about 15% to about 40%, and more preferably from about 20% to about 35%, by weight of the chewing gum composition. In this embodiment, the gum base will comprise an elastomer and a variety of traditional ingredients such as an elastomer solvent, waxes, emulsifiers, plasticizers or softeners, bulking agents such as mineral adjuvants which may serve as fillers and textural agents, coloring agents, antioxidants, preservatives, flavoring agents, and the like, and mixtures thereof. Illustrative examples of these gum base components have been set out above.

Once prepared, the gum base may be formulated with the stabilized sweetening agent composition of the present invention and conventional additives such as a bulking agent and flavoring agent to prepare a wide variety of chewing gum compositions.

In addition to the gum base, the chewing gum composition may include a bulking agent. These bulking agents (carriers, extenders) may be water-soluble and include bulking agents selected from the group consisting of, but not limited to, monosaccharides, disaccharides, polysaccharides, sugar alcohols, and mixtures thereof; isomalt (a racemic mixture of alpha-D-glucopyranosyl-1,6-mannitol and alpha-D-glucopyranosyl-1,6-sorbitol manufactured under the tradename Palatinit by Suddeutsche Zucker), maltodextrins; hydrogenated starch hydrolysates; hydrogenated hexoses; hydrogenated disaccharides; minerals, such as calcium carbonate, talc, titanium dioxide, dicalcium phosphate, celluloses and the like, and mixtures thereof. Bulking agents may be used in amounts up to about 60%, and preferably in amounts from about 25% to about 60%, by weight of the chewing gum composition.

Suitable sugar bulking agents include monosaccharides, disaccharides and polysaccharides such as xylose, ribulose, glucose (dextrose), mannose, galactose, fructose (levulose), sucrose (sugar), maltose, invert sugar, partially hydrolysed starch and corn syrup solids, and mixtures thereof. Mixtures of sucrose and corn syrup solids are the preferred sugar bulking agents.

Suitable sugar alcohol bulking agents include sorbitol, xylitol, mannitol, galactitol, maltitol, and mixtures thereof. Mixtures of sorbitol and mannitol are the preferred sugar alcohol bulking agents.

Maltitol is a sweet, non-caloric, water-soluble sugar alcohol useful as a bulking agent in the preparation of non-caloric beverages and foodstuffs and is more fully described in United States patent no. 3,708,396, which disclosure is incorporated herein by reference. Maltitol is made by hydrogenation of maltose which is the most common reducing disaccharide and is found in starch and other natural products.

The gum composition may include effective amounts of conventional additives selected from the group consisting of plasticizers, softeners, emulsifiers, waxes, fillers, mineral adjuvants, flavoring agents (flavors, flavorings), coloring agents (colorants, colorings), antioxidants, acidulants, thickening agents, and the like, and mixtures thereof. These ingredients are present in the chewing gum composition in an amount to bring the total amount of chewing gum composition to 100%. Some of these additives may serve more than one purpose. For example, in sugarless gum compositions, a sweetener, such as sorbitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickening agents, used alone or in combination with other softeners, such as methyl cellulose, alginates, carrageenan, xanthan gum, gelatin, carob, tragacanth, and locust bean, acidulants such as malic acid, adipic acid, citric acid, tartaric acid, fumaric acid, and mixtures thereof, and fillers, such as those discussed above under the category of mineral adjuvants.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations of those. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, artificial vanilla, cinnamon derivatives, and various fruit flavors, whether employed individually or in admixture. Generally any flavoring or food additive such as those described in Chemicals Used in Food Processing, publication 1274, pages 63-258, by the National Academy of Sciences, may be used.

The flavoring agent may be employed in either liquid form or dried form. When employed in the dried form, suitable drying means such as spray drying the oil may be used. Alternatively, the flavoring agent may be absorbed onto water soluble materials, such as cellulose, starch, sugar, maltodextrin, and gum arabic, or may be encapsulated. The actual techniques for preparing such dried forms are well known and do not constitute a part of this invention.

The flavoring agents of the present invention may be used in many distinct physical forms well known in the art to provide an initial burst of flavor or a prolonged sensation of flavor, or both. Without being limited thereto, such physical forms include free forms, such as spray dried, powdered, and beaded forms, and encapsulated forms, and mixtures thereof.

Encapsulated delivery systems for flavoring agents or sweetening agents comprise a hydrophobic matrix of fat or wax surrounding a sweetening agent or flavoring agent core. The fats may be selected from any number of conventional materials such as fatty acids, glycerides or polyglycerol esters, sorbitol esters, and mixtures thereof. Examples of fatty acids include hydrogenated and partially hydrogenated vegetable oils such as palm oil, palm kernel oil, peanut oil, rapeseed oil, rice bran oil, soybean oil, cottonseed oil, sunflower oil, safflower oil, and mixtures thereof. Glycerides which are useful include monoglycerides, diglycerides, and triglycerides.

Waxes useful may be chosen from the group consisting of natural and synthetic waxes, and mixtures thereof. Non-limiting examples include paraffin wax, petrolatum, carbowax, microcrystalline wax, beeswax, carnauba wax, candellila wax, lanolin, bayberry wax, sugarcane wax, spermaceti wax, rice bran wax, and mixtures thereof.

The fats and waxes may be used individually or in combination in amounts varying from about 10 to about 70%, and preferably in amounts from about 40 to about 58%, by weight of the encapsulated system. When used in combination, the fat and wax are preferably present in a ratio from about 70:10 to 85:15, respectively.

Typical encapsulated flavoring agent or sweetening agent delivery systems are disclosed in United States patents no. 4,597,970 and 4,722,845, which disclosures are incorporated herein by reference.

The amount of flavoring agent employed herein is normally a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from about 0.02% to about 5%, and preferably from about 0.1% to about 2%, and more preferably, from about 0.8% to about 1.8%, by weight of the chewing gum composition.

The coloring agents useful in the present invention are used in amounts effective to produce the desired color. These coloring agents include pigments which may be incorporated in amounts up to about 6%, by weight of the gum composition. A preferred pigment, titanium dioxide, may be incorporated in amounts up to about 2%, and preferably less than about 1%, by weight of the gum composition. The colorants may also include natural food colours and dyes suitable for food, drug and cosmetic applications. These colorants are known as F.D.& C. dyes and lakes. The materials acceptable for the foregoing uses are preferably water-soluble. An illustrative examples are the indigoid dye known as F.D.& C. Blue No. 2, which is the disodium salt of 5,5-indigotindisulfonic acid, and the triphenylmethane dye known as F.D.& C. Green No. 1, which is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

Suitable oils and fats usable in gum compositions include partially hydrogenated vegetable or animal fats, such as coconut oil, palm kernel oil, beef tallow, lard, and the like. These ingredients when used are generally present in amounts up to about 7%, and preferably up to about 3.5%, by weight of the gum composition.

In accordance with this invention, effective amounts of the stabilized sweetening agent composition of the present invention are admixed into the chewing gum compositions. As set out above, the stabilized sweetening agent compositions of the present invention comprise a chlorodeoxysugar derivative and an effective amount of a stabilizing agent. The exact amount of stabilized sweetening agent composition employed is normally a matter of preference subject to such factors as the particular type of gum composition being prepared, the type of bulking agent employed, the type of flavor employed and the intensity of sweetness desired. Thus, the amount of stabilized sweetening agent composition may be varied in order to obtain the result desired in the final product and such variations are within the capabilities of those skilled in the art without the need for undue experimentation. In general, the amount of stabilized sweetening agent composition normally present in a chewing gum composition will be up to about 1.5%, preferably from about 0.001% to about 1%, and more preferably from about 0.005% to about 0.4%, by weight of the chewing gum composition.

The present invention also includes a method for preparing the improved chewing gum compositions, including both chewing gum and bubble gum formulations. The chewing gum compositions may be prepared using standard techniques and equipment known to those skilled in the art. The apparatus useful in accordance with the present invention comprises mixing and heating apparatus well known in the chewing gum manufacturing arts, and therefore the selection of the specific apparatus will be apparent to the artisan.

In such a method, a chewing gum composition is made by admixing the gum base with the stabilized sweetening agent composition and the other ingredients of the final desired chewing gum composition. Other ingredients will usually be incorporated into the composition as dictated by the nature of the desired composition as well known by those having ordinary skill in the art. The ultimate chewing gum compositions are readily prepared using methods generally known in the food technology and chewing gum arts.

For example, the gum base is heated to a temperature sufficiently high to soften the base without adversely effecting the physical and chemical make up of the base. The optimal temperatures utilized may vary depending upon the composition of the gum base used, but such temperatures are readily determined by those skilled in the art without undue experimentation.

The gum base is conventionally melted at temperatures that range from about 60° C. to about 120° C. for a period of time sufficient to render the base molten. For example, the gum base may be heated under these conditions for a period of about thirty minutes just prior to being admixed incrementally with the remaining ingredients of the gum composition such as the inventive stabilized sweetening agent composition, plasticizer, the softener, the bulking agent, and/or fillers, coloring agents and flavoring agents to plasticize the blend as well as to modulate the hardness, viscoelasticity and formability of the base. Mixing is continued until a uniform mixture of gum composition is obtained. Thereafter the gum composition mixture may be formed into desirable chewing gum shapes.

In a preferred embodiment, the invention is directed at a method for preparing a sweetened chewing gum composition which comprises:
(A) providing the following ingredients:
   (a) a gum base;
   (b) a bulking agent;
   (c) an effective amount of a stabilized sweetening agent composition in solid form which comprises a freeze-dried mixture of a chlorodeoxysugar derivative and an effective amount of a stabilizing agent; and
   (d) a flavoring agent;
(B) melting the gum base;
(C) admixing the bulking agent and the stabilized sweetening agent composition with the melted gum base; and
(D) forming the mixture from step (C) into suitable gum shapes.

Another important aspect of the present invention includes a sweetened confectionery composition incorporating the inventive stabilized sweetening agent composition and a method for preparing the sweetened confectionery compositions. The preparation of confectionery formulations is historically well known and has changed little through the years. Confectionery items have been classified as either "hard" confectionery or "soft" confectionery. The stabilized sweetening agent compositions of the present invention can be incorporated into the confections by admixing the inventive composition into the conventional hard and soft confections.

Hard confectionery may be processed and formulated by conventional means. In general, a hard confectionery has a base composed of a mixture of sugar and other carbohydrate bulking agents kept in an amorphous or glassy condition. This form is considered a solid syrup of sugars generally having from about 0.5% to about 1.5% moisture. Such materials normally contain up to about 92% corn syrup, up to about 55% sugar and from about 0.1% to about 5% water, by weight of the final composition. The syrup component is generally prepared from corn syrups high in fructose, but may include other materials. Further ingredients such as flavorings, sweeteners, acidulants, colorants and so forth may also be added.

Such confectionery may be routinely prepared by conventional methods such as those involving fire cookers, vacuum cookers, and Scraped-surface cookers also referred to as high speed atmospheric cookers.

Fire cookers involve the traditional method of making a candy base. In this method, the desired quantity of carbohydrate bulking agent is dissolved in water by heating the agent in a kettle until the bulking agent dissolves. Additional bulking agent may then be added and cooking continued until a final temperature of 145° C. to 156° C. is achieved. The batch is then cooled and worked as a plastic-like mass to incorporate additives such as flavors, colorants and the like.

A high-speed atmospheric cooker uses a heat-exchanger surface which involves spreading a film of candy on a heat exchange surface, the candy is heated to 165° C. to 170° C. in a few minutes. The candy is then rapidly cooled to 100° C. to 120° C. and worked as a plastic-like mass enabling incorporation of the additives, such as flavors, colorants and the like.

In vacuum cookers, the carbohydrate bulking agent is boiled to 125° C. to 132° C., vacuum is applied and additional water is boiled off without extra heating. When cooking is complete, the mass is a semi-solid and has a plastic-like consistency. At this point, flavors, colorants, and other additives are admixed in the mass by routine mechanical mixing operations.

The optimum mixing required to uniformly mix the flavors, colorants and other additives during conventional manufacturing of hard confectionery is determined by the time needed to obtain a uniform distribution of the materials. Normally, mixing times of from 4 to 10 minutes have been found to be acceptable.

Once the candy mass has been properly tempered, it may be cut into workable portions or formed into desired shapes. A variety of forming techniques may be utilized depending upon the shape and size of the final product desired. A general discussion of the composition and preparation of hard confections may be found in H.A. Lieberman, Pharmaceutical Dosage Forms: Tablets, Volume 1 (1980), Marcel Dekker, Inc., New York, N.Y. at pages 339 to 469, which disclosure is incorporated herein by reference.

The apparatus useful in accordance with the present invention comprises cooking and mixing apparatus well known in the confectionery manufacturing arts, and therefore the selection of the specific apparatus will be apparent to the artisan.

In contrast, compressed tablet confections contain particular materials and are formed into structures under pressure. These confections generally contain sugars in amounts up to about 95%, by weight of the composition, and typical tablet excipients such as binders and lubricants as well as flavors, colorants and so forth.

Similar to hard confectionery, soft confectionery may be utilized in this invention. The preparation of soft confections, such as nougat, involves conventional methods, such as the combination of two primary components, namely (1) a high boiling syrup such as a corn syrup, or the like, and (2) a relatively light textured frappe, generally prepared from egg albumin, gelatin, vegetable proteins, such as soy derived compounds, sugarless milk derived compounds such as milk proteins, and mixtures thereof. The frappe is generally relatively light, and may, for example, range in density from about 0.5 to about 0.7 grams/cc.

The high boiling syrup, or "bob syrup" of the soft confectionery is relatively viscous and has a higher density than the frappe component, and frequently contains a substantial amount of carbohydrate bulking agent such as a Polydextrose. Conventionally, the final nougat composition is prepared by the addition of the "bob syrup" to the frappe under agitation, to form the basic nougat mixture. Further ingredients such as flavoring, additional carbohydrate bulking agent, colorants, preservatives, medicaments, mixtures thereof and the like may be added thereafter also under agitation. A general discussion of the composition and preparation of nougat confections may be found in B.W. Minifie, Chocolate, Cocoa and Confectionery: Science and Technology, 2nd edition, AVI Publishing Co., Inc., Westport, Conn. (1980), at pages 424-425, which disclosure is incorporated herein by reference.

The procedure for preparing the soft confectionery involves known procedures. In general, the frappe component is prepared first and thereafter the syrup component is slowly added under agitation at a temperature of at least about 65° C., and preferably at least about 100° C. The mixture of components is continued to be mixed to form a uniform mixture, after which the mixture is cooled to a temperature below 80° C., at which point, the flavor may be added. The mixture is further mixed for an additional period until it is ready to be removed and formed into suitable confectionery shapes.

In accordance with this invention, effective amounts of the stabilized sweetening agent compositions of the present invention are admixed into the hard and soft confections. As set out above, the stabilized sweetening agent composition of the present invention comprises a chlorodeoxysugar derivative and an effective amount of a stabilizing agent. The exact amount of stabilized sweetening agent composition may be varied in order to obtain the result desired in the final product and such variations are within the capabilities of those skilled in the art without the need for undue experimentation. The exact amount of stabilized sweetening agent composition employed is normally a matter of preference subject to such factors as the particular type of confection being prepared, the type of bulking agent or carrier employed, the type of flavor employed and the intensity of sweetness desired. Thus, the amount of stabilized sweetening agent composition may be varied in order to obtain the result desired in the final product and such variations are within the capabilities of those skilled in the art without the need for undue experimentation. In general, the amount of stabilized sweetening agent composition normally present in a hard or soft confection will be up to about 1.5% preferably from about 0.001% to about 1%, and more preferably from about 0.005% to about 0.4%, by weight of the confection.

The present invention extends to methods of making the improved sweetened confections. The stabilized sweetening agent compositions may be incorporated into an otherwise conventional hard or soft confection composition using standard techniques and equipment known to those skilled in the art. The apparatus useful in accordance with the present invention comprises mixing and heating apparatus well known in the confectionery manufacturing arts, and therefore the selection of the specific apparatus will be apparent to the artisan.

In such a method, a composition is made by admixing the inventive stabilized sweetening agent composition into the confectionery composition along with the other ingredients of the final desired composition. Other ingredients will usually be incorporated into the composition as dictated by the nature of the desired composition as well known by those having ordinary skill in the art. The ultimate confectionery compositions are readily prepared using methods generally known in the food technology and pharmaceutical arts. Thereafter the confectionery mixture may be formed into desirable confectionery shapes.

The stabilized sweetening agent compositions may be formulated with conventional ingredients which offer a variety of textures to suit particular applications. Such ingredients may be in the form of hard and soft confections, tablets, toffee, nougat, chewy candy, chewing gum and so forth, both sugar and sugarless. The acceptable ingredients may be selected from a wide range of materials. Without being limited thereto, such materials include diluents, binders and adhesives, lubricants, disintegrants, bulking agents, humectants and buffers and adsorbents. The preparation of such confections and chewing gum products is well known.

Throughout this application, various publications have been referenced. The disclosures in these publications are incorporated herein by reference in order to more fully describe the state of the art.

The present invention is further illustrated by the following figures and examples which are not intended to limit the effective scope of the claims. All parts and percentages in the examples and throughout the specifications and claims are by weight of the final composition unless otherwise specified.

### Example

This example demonstrates the relative stability of a freeze-dried mixture of Sucralose, a buffer agent, and a preservative during storage.

A composition was prepared by forming a solution, in percentages by weight, of Sucralose in an amount of about 25%, citric acid-sodium citrate in an amount to maintain the pH value of the solution at about 4.4, and sodium benzoate in an amount of about 0.10% and potassium sorbate in an amount of about 0.10%. The composition of this Example was freeze-dried and then stored in an oven at 45° C. (113° F.) under otherwise ambient conditions to accelerate degradation.

The composition of this Example remained stable for 30 days and was judged a very stable chlorodeoxysugar sweetening agent composition.

## Claims

1. A stabilized chlorodeoxysugar sweetening agent composition in solid form which comprises a freeze-dried mixture of a chlorodeoxysugar derivative and an effective amount of a non-bulk stabilizing agent comprising a buffer agent and a preservative, said preservative being selected from the group consisting of sodium benzoate, potassium sorbate, butylated hydroxyanisol, butylated hydroxytoluene, benzoic acid, ascorbic acid, methyl parabene, propyl parabene, tocopherols and mixtures thereof.

2. The stabilized sweetening agent composition according to claim 1, wherein the non-bulk stabilizing agent comprises 0.01 to 0.4% by weight of a buffer agent and 0.01 to 0.5% by weight of a preservative, based on the weight of the sweetening composition.

3. The stabilized sweetening agent composition according to claim 1 or 2, wherein the chlorodeoxysugar derivative is selected from the group consisting of chlorodeoxysucrose derivatives or chlorodeoxygalactosucrose derivatives, and mixtures thereof.

4. The stabilized sweetening agent composition according to claim 3, wherein the chlorodeoxygalacto-sucrose derivative is 4,1',6'-trichloro-4,1',6'-trideoxygalacto-sucrose.

5. The stabilized sweetening agent composition according to any of the claims 1 to 4, wherein the buffer agent is selected from citric acid-sodium citrate, phosphoric acid-potassium phosphate, acetic acid-sodium acetate, and mixtures thereof.

6. The stabilized sweetening agent composition according to claim 5, wherein the ratio of weak acid to salt in the buffer agent is from 1:1.27 to 1:0.16.

7. A sweetened ingestible composition comprising a pharmaceutically acceptable carrier and an effective amount of a stabilized sweetening agent composition according to any of the claims 1 to 6.

8. A sweetened chewing gum composition comprising a) a gum base, b) a bulking agent, c) a flavouring agent, and d)an effective amount of a stabilized sweetening agent according to any of claims 1 to 6.

9. The chewing gum composition according to claim 8, wherein the stabilized sweetening agent composition is present in an amount of up to 0.5 % by weight of the chewing gum composition.

10. A sweetened confectionery composition comprising a confectionery bulking agent and an effective amount of the stabilized sweetening agent composition according to any one of the claims 1 to 6.

11. A process of preparing a stabilized sweetening agent composition according to any one of the claims 1 to 6 in solid form comprising
(A) admixing a chlorodeoxysugar derivative and a non-bulk stabilizing agent in water; wherein the non-bulk stabilizing agent comprises a buffer agent and a preservative, the buffer agent being present in an amount sufficient to maintain the pH-value of the water between 4 and 5 and
(B) freeze-drying the mixture from step (A) to obtain the stabilized sweetening agent composition.

12. A process of preparing a sweetened ingestion composition according to claim 7
comprising admixing
(a) a composition prepared according to claim 11 and
(b) a pharmaceutically acceptable carrier.

13. A process of preparing a sweetened chewing gum composition according to claim 8 or 9
comprising admixing
(a) a stabilized sweetening composition prepared according to claim 7 and
(b) a gum base,
(c) a bulking agent and
(d) a flavouring agent.

14. A process of preparing a sweetened confectionery composition according to claim 10
comprising admixing
(a) a composition prepared according to claim 11 and
(b) a confectionery bulking agent.

## Patentansprüche

1. Stabilisierte Chlordeoxysaccharid-Typ Süßstoffzusammensetzung in fester Form, die eine gefriergetrocknete Mischung eines Chlordeoxysaccharid-Typ-Derivates und eine wirksame Menge eines kleinen Anteils an Stabilisiermittel umfaßt, das eine Puffersubstanz und ein Konservierungsmittel umfaßt, wobei das Konservierungsmittel aus der Gruppe ausgewählt ist, die aus Natriumbenzoat, Kaliumsorbat, butyliertem Hydroxyanisol, butyliertem Hydroxytoluol, Benzoesäure, Ascorbinsäure, Methylparaben, Propylparaben, Tocopherolen und Mischungen daraus besteht.

2. Stabilisierte Süßstoffzusammensetzung nach Anspruch 1, bei der der kleine Anteil an Stabilisiermittel 0,01 bis 0,4 Gew.-% einer Puffersubstanz und 0,01 bis 0,5 Gew.-% eines Konservierungsmittels auf Basis des Gewichtes der Süßstoffzusammensetzung umfaßt.

3. Stabilisierte Süßstoffzusammensetzung nach Anspruch 1 oder 2, bei der das Chlordeoxysaccharid-Typ-Derivat aus der Gruppe ausgewählt ist, die aus Chlordeoxysaccharose-Derivaten oder Chlordeoxygalactosaccharose-Derivaten und Mischungen daraus besteht.

4. Stabilisierte Süßstoffzusammensetzung nach Anspruch 3, bei der das Chlordeoxygalactosaccharose-Derivat 4,1',6'-Trichlor-4,1,6'-trideoxygalactosaccharose ist.

5. Stabilisierte Süßstoffzusammensetzung nach einem der Ansprüche 1 bis 4, bei der die Puffersubstanz unter Zitronensäure-Natriumcitrat, Phosphorsäure-Kaliumphosphat, Essigsäure-Natriumacetat und Mischungen daraus ausgewählt ist.

6. Stabilisierte Süßstoffzusammensetzung nach Anspruch 5, bei der das Verhältnis von schwacher Säure zu Salz in der Puffersubstanz von 1 : 1,27 bis 1 : 0,16 beträgt.

7. Gesüßte, mit der Nahrung aufnehmbare Zusammensetzung, die eine pharmazeutisch annehmbare Trägersubstanz und eine wirksame Menge einer stabilisierten Süßstoffzusammensetzung nach einem der Ansprüche 1 bis 6 umfaßt.

8. Gesüßte Kaugummizusammensetzung, die a) einen Gummigrundbestandteil, b) einen Füllstoff, c) einen Aromastoff und d) eine wirksame Menge eines stabilisierten Süßstoffes nach einem der Ansprüche 1 bis 6 umfaßt.

9. Kaugummizusammensetzung nach Anspruch 8, bei der die stabilisierte Süßstoffzusammensetzung in einer Menge bis 0,5 Gew.-% der Kaugummizusammensetzung vorliegt.

10. Gesüßte Süßwarenzusammensetzung, die einen Füllstoff für Süßwaren und eine wirksame Menge der stabilisierten Süßstoffzusammensetzung nach einem der Ansprüche 1 bis 6 umfaßt.

11. Verfahren zur Herstellung einer stabilisierten Süßstoffzusammensetzung nach einem der Ansprüche 1 bis 6 in fester Form, das
(A) Beimengen eines Chlordeoxysaccharid-Typ-Derivates und eines kleinen Anteils an Stabilisiermittel in Wasser; wobei der kleine Anteil an Stabilisiermittel eine Puffersubstanz und ein Konservierungsmittel umfaßt, und die Puffersubstanz in einer ausreichenden Menge vorliegt, um den pH-Wert des Wassers zwischen 4 und 5 beizubehalten, und
(B) Gefriertrocknen der Mischung aus Schritt (A), um die stabilisierte Süßstoffzusammensetzung zu erhalten,
umfaßt.

12. Verfahren zur Herstellung einer gesüßten, mit der Nahrung aufnehmbaren Zusammensetzung nach Anspruch 7, das Beimischen
a) einer nach Anspruch 11 hergestellten Zusammensetzung und
b) einer pharmazeutisch zulässigen Trägersubstanz
umfaßt.

13. Verfahren zur Herstellung einer gesüßten Kaugummizusammensetzung nach Anspruch 8 oder 9, das Beimischen
a) einer nach Anspruch 7 hergestellten, stabilisierten Süßstoffzusammensetzung und
b) eines Gummigrundbestandteiles,
c) eines Füllstoffes und
d) eines Aromastoffes
umfaßt.

14. Verfahren zur Herstellung einer gesüßten Süßwarenzusammensetzung nach Anspruch 10, das Beimischen
a) einer nach Anspruch 11 hergestellten Zusammensetzung und
b) eines Füllstoffes für Süßwaren
umfaßt.

## Revendications

1. Composition d'agent édulcorant chlorodéoxysucre stabilisé sous forme solide, qui comprend un mélange séché par lyophilisation d'un dérivé de chlorodéoxysucre et une quantité efficace d'un agent stabilisant non volumineux comprenant un agent tampon et un conservateur, ledit conservateur étant choisi dans le groupe constitué des benzoate de sodium, sorbate de potassium, hydroxyanisol butylé, hydroxytoluène butylé, acide benzoïque, acide ascorbique, méthylparabène, propylparabène, tocophérols et leurs mélanges.

2. Composition d'agent édulcorant stabilisé selon la revendication 1, ou l'agent stabilisant non volumineux comprend 0,01 à 0,4 % en poids d'un agent tampon, et 0,01 à 0,5 % en poids d'un conservateur, rapporté au poids de la composition d'agent édulcorant.

3. Composition d'agent édulcorant stabilisé selon la revendication 1 ou 2, où le dérivê de chlorodéoxysucre est choisi dans le groupe constitué des dérivés de chlorodéoxysaccharose, ou des dérivés de chlorodéoxygalactosaccharose, et leurs mélanges.

4. Composition d'agent édulcorant stabilisé selon la revendication 3, où le dérivé de chlorodéoxygalactosaccharose est le 4,1',6'-trichloro-4,1',6'-tridéoxygalactosaccharose.

5. Composition d'agent édulcorant stabilisé selon l'une quelconque des revendications 1 à 4, où l'agent tampon est choisi parmi les mélanges acide citriquecitrate de sodium, acide phosphorique-phosphate de potassium, acide acétique-acétate de sodium, et leurs mélanges.

6. Composition d'agent édulcorant stabilisé selon la revendication 5, où le rapport de l'acide faible au sel dans l'agent tampon est de 1:1,27 à 1:0,16.

7. Composition édulcorée ingérable comprenant un véhicule pharmaceutiquement acceptable et une quantité efficace d'une composition d'agent édulcorant stabilisé selon l'une quelconque des revendications 1 à 6.

8. Composition de chewing gum édulcorée comprenant a) une base de gomme, b) un agent volumineux, c) un agent aromatique, et d) une quantité efficace de l'agent édulcorant stabilisé selon l'une quelconque des revendications 1 à 6.

9. Composition de chewing gum selon la revendication 8, où la composition d'agent édulcorant stabilisé est présente en une quantité pouvant atteindre 0,5 % en poids de la composition de chewing gum.

10. Composition de confiserie édulcorée comprenant un agent volumineux de confiserie, et une quantité efficace de la composition d'agent édulcorant stabilisé selon l'une quelconque des revendications 1 à 6.

11. Procédé de préparation d'une composition d'agent édulcorant stabilisé selon l'une quelconque des revendications 1 à 6, sous forme solide, comprenant :
(A) de mélanger un dérivé de chlorodéoxysucre, et un agent stabilisant non volumlneux dans l'eau ; où l'agent stabilisant non volumineux comprend un agent tampon et un conservateur, l'agent tampon étant présent en une quantité suffisante pour maintenir le pH de l'eau entre 4 et 5 ; et
(B) de lyophiliser le mélange de l'étape (A) pour donner la composition d'agent édulcorant stabilisé .

12. Procédé de préparation d'une composition édulcorée à ingérer selon la revendication 7,
qui comprend de mélanger
(a) une composition préparée selon la revendication 11, et
(b) un véhicule pharmaceutiquement acceptable.

13. Procédé de préparation d'une composition de chewing gum édulcorée selon la revendication 8 ou la revendication 9, qui comprend de mélanger
(a) une composition édulcorante stabilisée selon la revendication 7 ; et
(b) une base de gomme,
(c) un agent volumineux ; et
(d) un agent aromatique.

14. Procédé de préparation d'une composition de confiserie édulcorée selon la revendication 10
qui comprend de mélanger
(a) une composition préparée selon la revendication 11, et
(b) un agent volumineux de confiserie.
